# EUROPÄISCHE PATENTSCHRIFT

(11) **EP 4 062 052 B1**
(45) Veröffentlichungstag und Bekanntmachung des Hinweises auf die Patenterteilung: **13.03.2024**
(21) Anmeldenummer: 20817227.0
(22) Anmeldetag: 20.11.2020
(51) Int. Cl.: B64C 31/06, B64C 39/02, F03D 5/00, B64C 37/02

(54) **HÖHENWINDRAD MIT AUTONOMEN SENKRECHT STARTENDEN FLÜGELN**
HIGH-ALTITUDE-WIND TURBINE WITH AUTONOMOUS WINGS VERTICAL AT TAKEOFF
ÉOLIENNE EXPLOITANT LES VENTS DE HAUTE ALTITUDE ÉQUIPÉE DE PALES AUTONOMES À DÉCOLLAGE EN POSITION VERTICALE

(30) Priorität: 20.11.2019 DE 102019008048; 25.11.2019 DE 102019131742; 25.11.2019 DE 202019106538 U
(43) Veröffentlichungstag der Anmeldung: 28.09.2022
(73) Patentinhaber: Miller, Bernhard, 71263 Weil der Stadt (DE)
(72) Erfinder: Miller, Bernhard, 71263 Weil der Stadt (DE)
(74) Vertreter: Patentanwälte und Rechtsanwalt Weiß, Arat & Partner mbB
(86) Internationale Anmeldenummer: PCT/EP2020/082935
(87) Internationale Veröffentlichungsnummer: WO 2021/099590

(56) Entgegenhaltungen:
- WO-A1-2019/135078
- US-A1- 2010 221 112
- US-A1- 2017 036 761
- US-A1- 2018 229 838
- US-B1- 9 248 910

## Beschreibung

### Technisches Gebiet

Die Erfindung betrifft eine Windkraftanlage zur Stromerzeugung durch Höhenwindnutzung nach dem Oberbegriff des Anspruchs 1.

### Stand der Technik

Windkraftanlagen mit rotierenden Flügelrädern haben sich seit einigen Jahrzehnten etabliert. Ein auf einem hohen Mast platzierter horizontal drehbarer Generator nutzt die Drehbewegung eines vom Wind in Rotation versetzten Flügelrades.

Des Weiteren ist bereits eine Reihe von alternativen Konzepten zur Nutzung von Höhenwind bekannt. Dabei wird z.B. Strom erzeugt indem Drachen oder Flügel über Seile mit am Boden platzierten Seilwinden verbunden sind. Die Mitnahme des Flügels durch den Wind führt zum Ausziehen des Seils und treibt einen Generator an, wodurch Strom erzeugt wird.

Daneben gibt es Flugzeuge, welche über zwei in den Flügeln integrierte starke Propellerantriebe sowie eine Stabilisierungstechnologie verfügen, so dass diese mit senkrecht stehendem Flügel starten und landen können. Eine speziell entwickelte Steuerungssoftware ermöglicht nach dem Start des Flügels einen Übergang vom vertikalen in den horizontalen Flugbetrieb.

In diesem Zusammenhang wird auf die WO 2019/135078 A1, die US 2010/221112 A1 und die US 2018/229838 A1 verwiesen. Dort sind verschiedene Ausführungen von Flügelrädern zur Stromerzeugung mittels Windkraft offenbart, wobei die Flügelräder aus mehreren einzelnen Flügeln besteht und jeder dieser Flügel einen oder mehrere Propeller besitzt, welche ein autarkes senkrechtes Starten und Landen des jeweiligen Flügels ermöglicht.

Die US 2017/036761 A1 beschreibt eine Windkraftanlage mit mindestens einem Blatt, auf dem ein Generator angeordnet ist, wobei der Rotationsradius der Flügel relativ zur Stützstruktur in Abhängigkeit von der Windgeschwindigkeit angepasst wird, wobei das Ziel ist, insbesondere die Optimierung des Leistungs/Kosten-Verhältnis einer Windkraftanlage zu optimieren, um die die Kosten der Windenergieerzeugung deutlich zu senken.

Die US 9 248 910 B1 offenbart ein fahrzeugbasiertes, luftgestütztes Windturbinensystem, das beispielsweise ein Schiff ziehen kann. Das Windturbinensystem umfasst einen Luftflügel mit einer Vielzahl von Rotoren, von denen jeder drehbare Flügel hat, die auf dem Flügel angeordnet sind. Die Tragfläche ist mit einem elektrisch leitenden Halteseil, die an einer Bodenstation auf dem Schiff befestigt. Die Tragfläche kann in einem Flugmodus betrieben werden, bei dem die Windenergie durch die Tragfläche während des Fluges genutzt wird und eine Zugkraft durch die Leine zum Schiff geleitet wird. Die Tragfläche kann auch in einem angetriebenen Flugmodus betrieben werden, bei dem die Rotoren angetrieben werden, um die Blätter zu drehen, die als schuberzeugende Propeller dienen, um eine zusätzliche Zugkraft zum Ziehen des Schiffes zu erzeugen. Der Tragflügel kann auch im Stromerzeugungsmodus während des Flugmodus oder angetriebenen Flugmodus arbeiten, bei dem sich die Luft über die drehbaren Rotorblätter eines oder mehrerer Rotoren in Drehung versetzt, Dadurch wird ein Generator zur Erzeugung elektrischer Energie angetrieben.

### Problemstellung

Der weitere Ausbau der Windkraft stößt wegen seiner Landschaftsbeeinträchtigung zunehmend auf Widerstand in der Bevölkerung. Des Weiteren sind die Erstellungs- und Betriebskosten wegen der aufwendigen Bauweise hoch.

Auch stockt der weitere Ausbau von Offshore Anlagen, da diese bislang nur bis 30 m Wassertiefe wirtschaftlich realisierbar sind und weltweit gesehen dadurch nur wenige Küstenbereiche hierfür nutzbar sind. Normale Windräder, wie sie z.B. als Kleinanlagen zur Stromerzeugung für einzelne Gebäude bekannt sind, können mit typisch einigen hundert Watt erzeugter Windleistung bestenfalls einen ergänzenden Beitrag zur Gesamtversorgung eines Gebäudes liefern. Die Wahl des Standortes konventioneller Windkraftanlagen ist deutlich eingeschränkt.

Soll gar eine Windkraftanlage zur Energieerzeugung in der Nähe eines bestehenden Gebäudes installiert werden, so ist häufig infolge des schlechten Standorts kein wirtschaftlicher Betrieb möglich.

### Lösung

Die in größeren Höhen vorherrschenden Winde sind stärker und stetiger als in Bodennähe und die damit nutzbare Energie ist gar um ein vielfaches höher als in Bodennähe.

Höhenwindkraftanlagen erzeugen typischer Weise Energie durch zyklisches Anheben und Einziehen von Flügeln bzw. Drachen, die durch den Wind gleiten. Die Besonderheit dieses Konzepts besteht darin, dass jeweils mehrere solcher Flügel mit Hilfe von Seilen zu einem rotierenden Flügelrad zusammengeführt werden. Die anbei beschriebene Anlage schafft daher die Möglichkeit, unabhängig vom Standort erneuerbare Windenergie zu nutzen.

Dabei nutzt dieses Windrad den weit energiereicheren Höhenwind in einer Höhe von z.B. 200 bis 500 m über Grund.

Wie bereits bei mehreren bekannten Flugwindkraftanlagen wird auch bei dieser Höhenwindkraftanlage Energie durch zyklisches Fieren und Einziehen von durch den Wind gleitenden Flügeln erzeugt (Jo-Jo).

An Stelle einzelner Flügel, wie sie in mehreren bekannten Konzepten verwendet werden, wird hierbei das Flügelrad vom Wind angeströmt und dadurch in Autorotation versetzt. Dieses Flügelrad ist über ein oder mehrere Zugseile mit einer Bodenstation verbunden. Im Gegensatz zu klassischen Windrädern wird hierbei die Rotation des Flügelrads lediglich zur Maximierung der Zugkraft und nicht zur Energieerzeugung direkt genutzt.

### Zeichnungen

Figur 1 zeigt einen einzelnen Flügel eines mit Seilen verbundenen Flügelrads nahe der Bodenstation
Figur 2 zeigt in einer seitlichen Schnittdarstellung den Teil eines Flügelrads
Figur 3 zeigt in einer Draufsicht eine Bodenstation für eine Gesamtanlage bestehend aus drei Flügelrädern
Figur 4 zeigt in einer Draufsicht ein einzelnes Flügelrad
Figur 5 Zeigt in einer Seitenansicht ein einzelnes Flügelrad

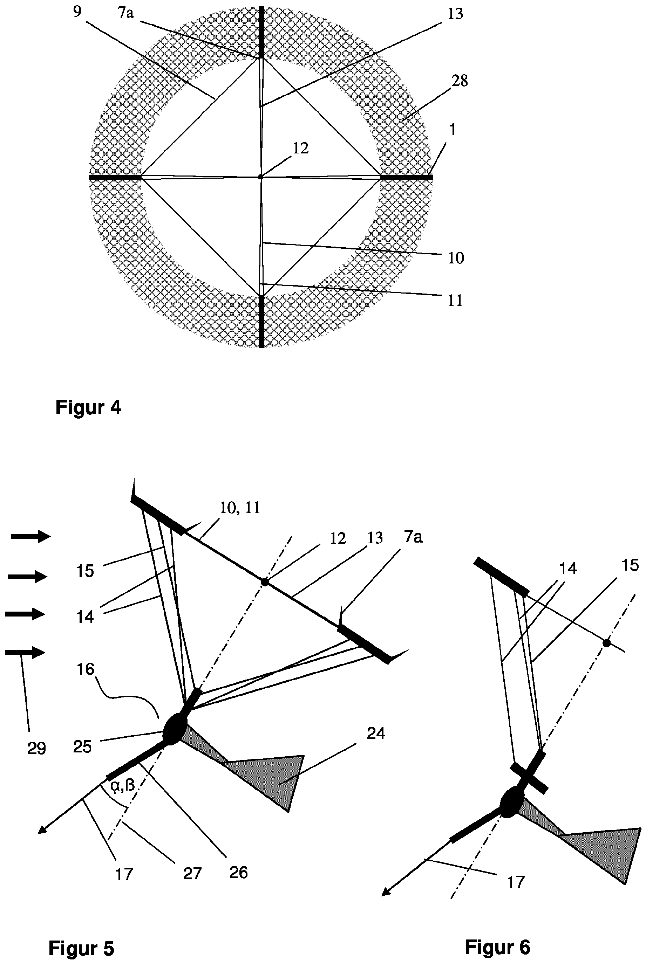

Figur 6 schließlich zeigt ähnlich wie Figur 5 eine alternative Anordnung der Verbindungsseile Um diese Höhenwindräder jederzeit starten und landen zu können, sind an jedem Flügel mindestens zwei Propeller angebracht. Jeder dieser Propeller hat an der jeweiligen Flügelrückseite ein Querruder. Alternativ dazu kann auch nur ein Propeller verwendet werden und dieser an der Flügelhinterkante mit zwei Querrudern zu versehen werden. Ergänzend kann ein Seitenruder platziert werden. Zur besseren Steuerbarkeit sind alle Quer- und Seitenruder vorteilhafter Weise so platziert, dass sie vom Luftstrom des jeweiligen Propellers angeströmt werden. Die zwei oder mehr Flügel eines Flügelrads sind an ihrer jeweiligen Innenseite über Seile 9, 10, 11, 13 miteinander verbunden. Diese Seile nehmen während des Rotierens die Fliehkräfte auf, so dass das Flügelrad um eine virtuelle Mitte 12 kreist. Gespeist werden die Antriebsmotoren 8 aus einem Akku.

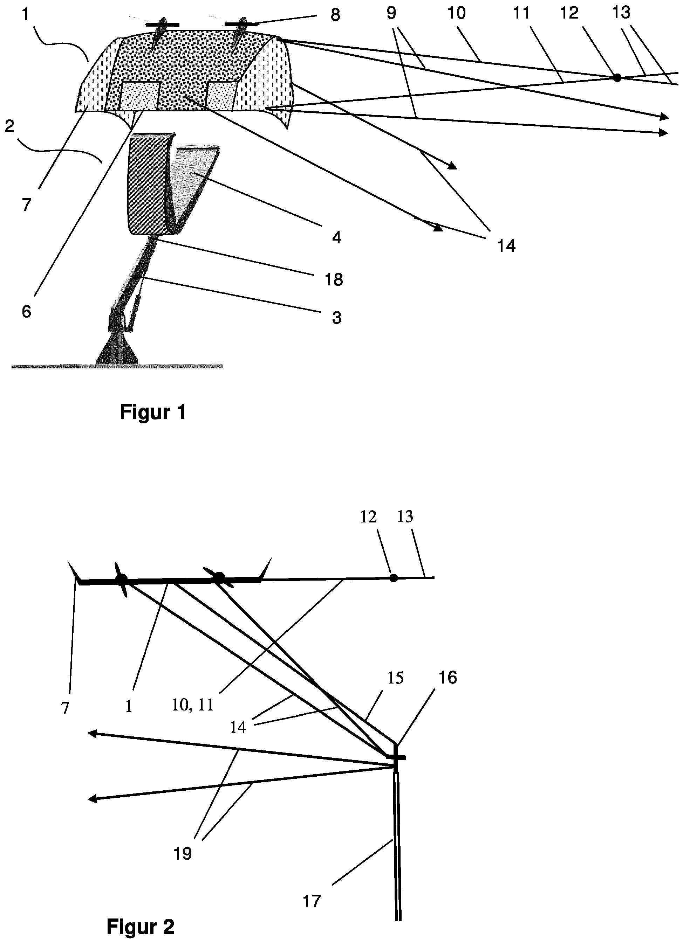

Nach Abschluss der Startphase werden die Flügel von der senkrechten Lage (Siehe Figur 1) in eine horizontale Position gebracht, wodurch die Flügel in eine rotierende Flugbahn versetzt werden und damit ein rotierendes Flügelrad bilden.

Während des Betriebs zur Stromerzeugung drehen sich z.B. drei oder vier Flügel um einen virtuellen Drehmittelpunkt 12 und sind über Verbindungsseile 10, 11 und 13 sowie zu den jeweiligen Nachbarflügeln über die Seile 9 miteinander verbunden. Der Drehantrieb des Flügelrads erfolgt durch den Wind ähnlich der von Tragschraubern bekannten Autorotation. Dabei entsteht während der Steigphase eine Steigerung der Zugkraft gleich dem bekannten Effekt des schnellen Schirmgleitens beim Kitesurfen. Das Flügelrad wird vom Wind mitgetragen, wobei das Zugseil 17 aus der Seiltrommel 21 gezogen wird. Dieses Abwickeln des Seils unter Zug treibt einen mit der Seiltrommel drehbar verbundenen Generator an, wodurch Strom z.B. zur Einspeisung ins öffentliche Stromnetz erzeugt wird.

Nach Erreichen der gewünschten Maximalhöhe wird der Anstellwinkel der einzelnen Flügel so verändert, dass das Flügelrad im schnellen Sinkflug an seine Ausgangshöhe zurückgeführt wird. Die Änderung des Anstellwinkels erfolgt z.B. durch relative Längenänderung der beiden Zugseile 17. Durch zurückstellen des Anstellwinkels am Ende der Einholphase vergrößert sich wieder die Zugkraft und das Flügelrad beginnt ähnlich einem Jo-Jo erneut unter hoher Zugkraft anzusteigen.

Im Falle einer Störung z.B. Ausfall eines Propellers an einem der Flügel 1 ist es möglich, dass die verbleibenden Flügel eines Flügelrads den defekten Flügel tragen und sicher zur Landestation zurückführen. Zu diesem Zweck ist es möglich, die Verbindungsseile 9,10 und 11 vom defekten Flügel 1 abzulösen. Dies kann z.B. dadurch geschehen, dass im Falle einer erkannten Störung die Anbindung der Seile 9,10 und 11 am defekten Flügel 1 losgelöst und z.B. abgesprengt oder abgeschnitten werden, ähnlich dem Prinzip der pyrotechnischen Treibladung eines Gurtstraffers in Automobilen bzw. elektrisch angetriebener Gartenscheren.

Die verbleibend funktionstüchtigen Flügel eines Flügelrads sind nur noch über die Verbindungsseile 14 mit dem defekten Flügel verbunden. Das Tragen des defekten Flügels erfolgt über die Verbindungsseile 14, so dass beide Propeller der funktionierenden Flügel eine gleichmäßige Lastenverteilung erfahren. Dadurch entsteht eine sehr hohe Betriebssicherheit, bei welcher selbst im Falle eines Defekts an einem der Flügel ein Abstürzen eines oder mehrerer Flügelräder verhindert werden kann. Ermöglicht wird dies dadurch, dass jeder Flügel im Vertikal- oder Horizontalflugmodus eigenständig fliegen kann. Im Falle eines defekten Flügels können die verbleibenden Flügel selbst im vertikalen Flugmodus mindestens das Gesamtgewicht des defekten Flügels tragen.

Die Bodenstation zur Aufnahme der Flügel besitzt für jeden Flügel eines Flügelrads einen dreh- und schwenkbaren Flügelhalteroboter 2, welcher den sich während der Landung nähernden Flügel aufnimmt, und sturmfest fixiert. Zur Aufnahme des Flügels umschließt der Greifer die Flügelfläche während sich dieser dem Flügelhalteroboter 2 nähert. Alternativ dazu ist es möglich, den Flügelhalteroboter 2 mit elastisch gelagerten Vakuumsaughebern 23 auszustatten, welche sich an der glatten Oberfläche des Flügels zuverlässig festsaugen.

Eine Kommunikation zwischen Flügel und dem Flügelhalteroboter 2 teilt dem Flügelhalteroboter die jeweils aktuelle räumliche Position des Flügels mit. Hierfür ist jeder Flügel mit einer dreidimensionalen Positionserkennung z.B. GPS und einer dreiachsigen Rotationslagenerkennung z.B. Beschleunigungssensor und Kompass ausgestattet.

Um eine Kostenoptimierung zu erreichen wird ermöglicht mehrere Flügelräder, welche mit Seilen 19 verbunden sind, gleichförmig fliegen zu lassen. Durch eine relative Längenänderung der Zugseile 17 zu den jeweiligen Nachbarflügelrädern kann die Gruppe von Flügelrädern gemeinsam in ihrer räumlichen Position gesteuert werden.

Mittels Verbindungsseilen 19 werden die einzelnen Flügelräder auf Abstand gehalten. Hierzu sind an jedem von z.B. 3 Flügelrädern Servomotoren 25 (wie in Figur 4 dargestellt) zur Verstellung der Rotationsachse gegenüber der Zugrichtung des Zugseils 16 angebracht. Gleichzeitig können die Servomotoren 25 verhindern, dass die gesamte Gruppe von Flügelrädern langsam rotiert.

### Bodenstation

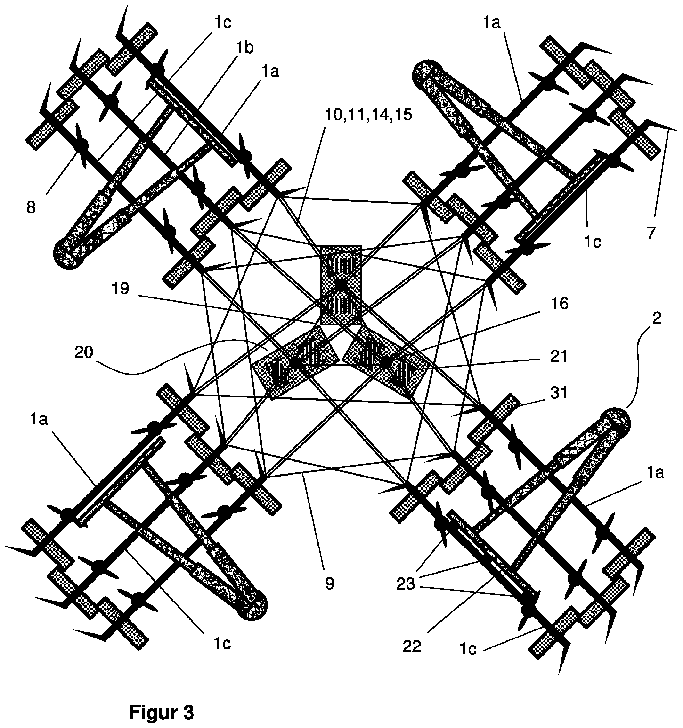

In Figur 3 ist in Draufsicht eine Bodenstation dargestellt, welche zur Aufnahme von z.B. drei oder mehr Flügelrädern ausgestattet ist. Am Beispiel der folgenden Beschreibung wird eine Anlage mit drei Flügelrädern beschrieben, wobei jedes der Flügelräder aus vier Flügeln besteht. Alternativ sind auch Anlagen möglich mit nur einem oder einer anderen Anzahl von Flügelrädern. Auch die Anzahl der Flügel pro Flügelrad kann variieren. Von jedem der Flügel führen zwei oder drei Verbindungsseile zum Drehlager.

Die Verbindungsseile 10, 11, 13, welche im Rotationsbetrieb vom Drehmittelpunkt 12 des rotierenden Flügelrads die Fliehkräfte aufnehmen, treten wie in Figur 4 gezeigt, im Bereich der inneren Winglet 7a in den Flügel ein und jeweils im Bereich der Untersete eines der Propellerantriebe wieder aus. Die Austrittstelle befindet sich nahe der Flügelvorderkante. Diese Seile führen nun zur Ableitung der Auftriebskräfte als Verbindungsseile 14 zum Drehlager 16.

Das Verbindungsseil 9 ist wie in Figur 3 und 4 gezeigt, in ähnlicher Weise an einer Flügelinnenkante fixiert und sorgt für einen festen Abstand (z.B. 90°) zwischen den einzelnen Flügeln. Am anderen Ende des Seils (am Nachbarflügel) tritt dieses Verbindungsseil 9 nahe dem Winglet 7a ebenfalls ins Innere des Flügels ein. Auch dieses Verbindungsseil 9 wird nur durch den Flügel durchgeleitet und tritt im Bereich der Hinterkante des Flügels als Verbindungsseil 15 wieder aus dem Flügel aus. Von dort führt es zum Drehlager 16, um ebenfalls Auftriebskräfte von der Hinterkante des Flügels an das Drehlager 17 zu übertragen. Alle drei in den Flügel eintretenden Verbindungsseile 9, 10, 11 besitzen wegen der hohen Fliehkräfte im Bereich des Flügels (Vorzugsweise im Bereich der massereichen Antriebsmotoren bzw. der Akkus) einen Anschlag und bestimmen damit den Durchmesser des Flügelrades.

Alle drei Seile 14,15 eines jeden Flügels werden während des Anflugs der Flügel zur Bodenstation im Bereich des bereits gelandeten und fixierten Drehlagers 16 mit Hilfe von an der Windenstation platzierten Seiltrommeln eingezogen. Dabei ist die Zugkraft der eingezogenen Verbindungsseile 14, 15 ggf. individuell derart drehmomentgeregelt, dass die Seile während der Landung nur leicht durchhängen und sich damit nirgends verfangen können.

Mit Hilfe des Durchleitens dieser jeweils drei Seile durch die entsprechenden Flügel können somit sämtliche im Bereich des Flügelrads befindlichen Seile auf einfache Art eingezogen werden. In Summe sind dies anhand des beschriebenen Beispiels 24 Seile (4 x 3 Verbindungsseile 14, 15 sowie 4x3 Verbindungsseile 9, 10, 11).

Um die Seiltrommeln 30 zum Aufwickeln der 12 bzw. 13 Seile einfach zu gestalten, können diese an einer gemeinsamen Welle von nur einem Antrieb angetrieben werden, wobei zwischen Antriebswelle und jeweiliger Seiltrommel sich jeweils eine Rutschkupplung (Z.B. Lamellenrutschkupplung) befindet. Das jeweilige Drehmoment der Seiltrommeln kann ggf. gemeinsam über verstellbare Anpresskraft der Lamellen oder individuell z.B. mittels Elektromagneten eingestellt werden.

Durch Anbringen von Drehzahl- bzw. Winkelsensoren an allen Seiltrommeln 30 kann die jeweils eingezogene Seillänge gemessen und an die zentrale Steuereinheit übermittelt werden. Diese kann das Ergebnis an die jeweiligen im Landeanflug befindlichen Flügel weitermelden. Somit entsteht ein redundantes Mittel zur aktuellen Positionserkennung für die startenden oder landenden Flügel.

Neben den Verbindungsseilen (10, 11, 14, 15) im Umfeld des jeweiligen Flügelrades ist an jeder Bodenstation eine separate Seiltrommel zum Einziehen der Verbindungsseile 19 zwischen den drei Flügelrädern. Diese Seile 19 sind jeweils an ihrem einen Ende Fest mit dem drehfesten unteren Ende des Drehlagers 16 verbunden. Das andere Ende dieses Seils 19 endet ebenfalls am unteren Ende des benachbarten Drehlagers 16. Hier ist das Seilende jedoch mit einem Anschlag (z.B. Seilverdickung) versehen, so dass dieses Seilende direkt nach dem Aufsetzen des Drehlagers in der Halterung der Bodenstation 20 erfasst und einer Seiltrommel 30 zugeführt wird. Diese Seiltrommel kann auch auf der gleichen Welle wie die übrigen bereits beschriebenen Seiltrommeln 30 platziert und angetrieben werden. Somit ist es möglich, dass auch die Verbindungsseile 19 während der Landung der z.B. drei Flügelräder entsprechend in leicht gespannter Art eingezogen werden.

In gleicher Weise werden ebenfalls direkt nach dem Aufsetzen des Drehlagers während der Landung alle Seilenden der vier Flügel (acht bzw. zwölf Verbindungsseile 14, 15) von z.B. roboterartigen Greifern erfasst und ihren jeweiligen Seiltrommeln 30 zugeführt.

### Startvorgang

Während des Startvorgangs wird jeder Flügel eines Flügelrads mit Hilfe des Flügelhalteroboters 2 windrichtungs- und windstärkeabhängig in die richtige Startposition gebracht. Mit Hilfe der Wetterdaten (Windrichtung und Windstärke) kann jeder Flügel durch den Flügelhalter exakt in die richtige Startposition ausgerichtet werden. Damit ist es möglich die Flügel selbst bei starkem Wind schnell und zuverlässig zu starten. Mit Hilfe des Elektroantriebs steigen die vier Flügel eines Flügelrads senkrecht auf und entfalten sich bis zum endgültigen Durchmesser des Flügelrads.

Dann schwenken die Flügel vom senkrechten in den horizontalen Flug und beginnen als Flügelrad zu rotieren.

Das Flügelrad bewegt sich nun horizontal seitlich weg von der Bodenstation und verharrt dann in einer Warteposition. Dadurch wird ermöglicht, dass ein zweites Flügelrad gleichermaßen starten kann. Auch dieses bewegt sich nun horizontal seitlich weg, jedoch um hier 120 Grad versetzt in eine andere Richtung und schafft damit ebenfalls Platz, damit ein drittes Flügelrad starten kann.

Sobald alle Flügelräder gestartet sind und rotieren, steigen diese über drei Verbindungseile 19 verbundenen Flügelräder auf bis in eine Höhe mit ausreichend starkem Wind. Nun schwenkt das Flügelrad bzw. die Gruppe von z.B. drei Flügelrädern wie in Figur 5 dargestellt, in eine schräge Anordnung, sodass der Wind das Flügelrad in Autorotation versetzt. Der Propellerantrieb kann nun abgeschaltet werden, wobei die beiden Propeller eingeklappt werden um einen minimalen Strömungswiderstand zu ermöglichen.

In ihrer geplanten Arbeitshöhe angekommen beginnen sie durch zyklisches Fieren und Absinken mit der Stromerzeugung.

### Landevorgang

Beim Auftreten von extremen Wetterbedingungen, einer Windflaute oder einer erkannten technischen Störung werden die Flügelräder vollautonom zur Bodenstation zurückgeführt.

Dazu lassen sich die noch rotierenden Flügelräder absinken bis auf eine Höhe, in der das Drehlager eines der drei Flügelräder an der Bodenstation aufsetzt und fixiert wird. Spezielle z.B. roboterartige Greifer kontaktieren nun die Seilenden der Verbindungsseile 14, 15 am Drehlager 16 und führen diese Seilenden zu den jeweiligen an der Windenstation platzierten Seiltrommeln 30. Diese Seiltrommeln beginnen daraufhin die Verbindungsseile einzuziehen, wobei mittels Rutschkupplungen jedes der Seile nur leicht gespannt wird um ein Durchhängen während des Landevorgangs zu vermeiden.

Diese (im dargestellten Beispiel) 13 Seiltrommeln 30 zur Aufnahme der Verbindungsseile befinden sich an der Bodenstation 20 räumlich zwischen den beiden Seiltrommeln 21 der Zugseile 17. Die vier Flügel des Flügelrads, dessen Drehlager 16 an der Bodenstation angedockt wurde, beginnen nun vom Horizontalflug in den Vertikalflug überzuwechseln. Dieser komplexe Wechsel in den Vertikalflug wurde bereits vor Jahren entwickelt und ist Stand der Technik. Damit wird jedem Flügel ermöglicht, wie ein bekannter Quadcopter bewegungslos in der Luft zu verharren. Im weiteren Landeablauf bewegen sich alle vier Flügel langsam schräg nach unten in Richtung des für sie bereitstehenden Flügelhalteroboters 2. Mittels z.B. Vakuumsaughebern kann der Flügel vom Flügelhalteroboter erfasst und festgehalten und an ihrem jeweiligen Parkposition sturmsicher abgelegt und fixiert werden. Gleichzeitig werden mit Hilfe der Seiltrommeln 30 alle Verbindungsseile 14, 15 derart eingezogen, dass diese nur leicht durchhängen.

Im Fall eines defekten Flügelhalteroboters 2 besteht die alternative Möglichkeit, dass ein Flügel während der Landung direkt an seinem vorgesehenen Aufbewahrungsort landet. Die Aufbewahrungsorte aller z.B. 12 Flügel sind zu diesem Zweck mit trichter- bzw. V-förmigen weichen Seitenwänden ausgestattet. Dabei wird der Flügel zur Sicherung und Verwahrung an seiner Flügelparkposition kraft- und/oder formschlüssig fixiert 31.

### Betrieb eines einzelnen Flügelrads

Um alternativ auch eine Anlage mit geringerer Nennleistung mit geringeren Anschaffungskosten zu ermöglichen, soll eine Anlage auch mit nur einem einzelnen Flügelrad möglich sein.

Hierzu soll, wie in Figur 5 gezeigt auch möglich sein, anstelle von zwei Zugseilen nur ein Zugseil 17 einzusetzen und auch nur ein Flügelrad zu verwenden.

Anstelle des Umschaltens der Anstellwinkel mittels der relativen Längendifferenz von zwei Zugseilen als Übergang vom stromerzeugenden Fierbetrieb zum schnellen Wiedereinholen des Flügelrads auf die Anfangshöhe kann diese Umschaltung alternativ über Zugkraftänderung am Zugseil 17 erfolgen. Wird beispielsweise bei Seilende am Ende des Fierens die Zugkraft reduziert mittels schnellen Seilauslassens durch die Seiltrommel 21, so stellt sich ein steiler Anstellwinkel an allen Flügeln des Flügelrads ein. Dies kann z.B. dadurch erfolgen, indem eine während des Fierens vorgespannte Feder sich nun entspannt und damit den Umschaltvorgang auslöst.

Damit gleitet im folgenden Verlauf das rotierende Flügelrad mit geringer Zugkraft nach unten während das Zugseil 17 von der Seiltrommel 21 der Bodenstation mit minimaler Zugkraft aufgewickelt wird. Ist das Flügelrad an seiner gewünschten unteren Arbeitshöhe angelangt, so erhöht die Seiltrommel 21 die Einzugsgeschwindigkeit deutlich und vergrößert damit auch die Zugkraft des Zugseils 17. Die Feder wird wieder vorgespannt und veranlasst, dass die Flügel des Flügelrads wieder einen zum Fieren geeigneten flachen Anstellwinkel annehmen. Das Flügelrad beginnt nun wieder unter großer Zugkraft anzusteigen und erzeugt im Generator der Seiltrommel Strom. Dieses Umschalten der Flügelanstellwinkel mit nur einem Seil kann auch wie bereits oben beschrieben, für eine Gruppe von Flügelrädern angewendet werden.

Zur Steuerung bzw. Positionierung des einzeln fliegenden Flügelrads wie in Figur 5 dargestellt, bestehen mehrere Möglichkeiten. So können anstelle nur eines Zugseils 17 drei Zugseile verwendet werden, welche am Drehlager 16 zu einer verstellbaren Abweichung der Rotationsachse des Flügelrads bezogen auf die Zugrichtung des Zugseils 17 führen (Siehe Figur 5 Winkel α, β).

Eine weitere Möglichkeit zur Abweichung der Rotationsachse besteht in der Platzierung von zwei Servomotoren 25. Ein kleiner Generator, ebenfalls im Drehlager platziert, sorgt für die dazu nötige Stromversorgung. Ein Leitwerk 24 verhindert, dass der feststehende Teil des Drehlagers nicht infolge der Lagerreibung rotiert.

Da während des Einholens des Flügelrads keine Stromeinspeisung erfolgt, entsteht mit jedem Arbeitszyklus (Fieren und Einholen) eine Einspeisungsunterbrechung. Diese kann beseitigt werden durch den Einsatz eines Speichers z.B. eines Schwungmassenspeichers. Dieser wird in der Phase des Fierens aufgeladen und überbrückt die Netzeinspeisung während der Phase des Einholens.

Eine weitere alternative Anordnung zeigt Figur 6, bei welcher die Verbindungsseile 14 an einem gemeinsamen Punkt am Drehlager angebunden sind und das Verbindungsseil 15 mit einem radialen und/oder axialen Abstand davon platziert ist. Damit kann ein Kippmoment des Flügels direkt auf das Drehlager übertragen werden.

### Legende

- 1: Einzelner Flügel eines Flügelrads
- 1a: Flügel eines Flügelrades 1
- 1b: Flügel eines Flügelrades 2
- 1c: Flügel eines Flügelrades 3
- 2: Flügelhalteroboter
- 3: Teleskopartiger beweglicher Arm der Bodenstation
- 4: Greifer
- 6: Querruder
- 7: Winglet
- 7a: Inneres Winglet
- 8: Propeller
- 9: Verbindungsseil von Flügelvorder- bzw. Hinterkante zu benachbarten Flügeln
- 10: Verbindungsseil von Flügelvorderkante zum Drehmittelpunkt des Flügelrads
- 11: Verbindungsseil von Flügelhinterkante zum Drehmittelpunkt des Flügelrads
- 12: Drehmittelpunkt des Flügelrads
- 13: Ein oder zwei Verbindungsseile von Drehmittelpunkt zum gegenüber platzierten Flügel
- 14: Ein oder zwei Verbindungsseile von Flügelvorderkante zum Drehlager
- 15: Verbindungsseil von Flügelhinterkante zum Drehlager
- 16: Drehlager des Flügelrads zur Verbindung des Flügelrads über die Zugseile 17 mit der Seilwinde 21 der Bodenstation
- 17: Ein oder zwei Zugseile als Verbindung zur Bodenstation
- 18: Schwenkbares Drehlager
- 19: Verbindungsseil zwischen den drei Flügelrädern
- 20: Windenstation mit 2 zwei Seiltrommeln und Motor/Generator
- 21: Seiltrommel mit Motor/Generator
- 22: Berührfläche mit mehreren Vakuumsaughebern als Alternative zu einem Greifer
- 23: Vakuumsaugheber zum Festhalten des Flügels durch den Flügelgreifer
- 24: Leitwerk
- 25: Servomotoren zur Verstellung der Rotationsachse gegenüber der Zugrichtung des Zugseils 17
- 26: Steife Verlängerung
- 27: Rotationsachse des Flügelrads
- 28: Flugbahn der Flügel
- 29: Windrichtung
- 30: Seiltrommeln z.B. 13 Stück mit jeweiliger Drehmomentrutschkupplung auf einer gemeinsamen Antriebswelle (nicht in Figuren dargestellt)
- 31: Positionierhilfe für z.B. Landung direkt im und Flügelfach

## Patentansprüche

1. Flügelrad zur Stromerzeugung mittels Windkraft bestehend aus mehreren einzelnen Flügeln (1a,1b,1c) jeder dieser Flügel einen oder mehrere Propeller (8) besitzt, welche ein autarkes senkrechtes Starten und Landen des jeweiligen Flügels ermöglicht, wobei alle Flügel eines Flügelrads mit Hilfe von Verbindungsseilen (9,10,11,13) miteinander verbunden sind, wobei
alle Flügel eines Flügelrads gemeinsam starten und landen, wobei im Fall eines defekten Flügels dieser von den verbleibenden Flügeln eines Flügelrads getragen und sicher zur Landestation zurückgeführt werden kann,
**dadurch gekennzeichnet, dass**
im Falle einer Störung an einem Flügel, verbleibende(r) weitere(r) Flügel den defekten Flügel tragen und diesen sicher zur Landestation zurückführt, wobei alle nicht mehr benötigten und eventuell störenden Verbindungsseile abgetrennt werden können, wobei mittels Vakuumsaughebern (23) ein im Schwebeflug befindlicher Flügel erfasst und vom Flügelhalteroboter (2) festgehalten werden kann.

## Claims

1. Impeller for generating electricity by means of wind power consisting of several individual blades (1a, 1b, 1c), each of these blades having one or more propellers (8) which enable the respective blade to take off and land vertically in an autonomous manner, wherein all the blades of an impeller are connected to one another with the aid of connecting ropes (9, 10, 11, 13), wherein all the blades of an impeller take off and land together, wherein in the event of a defective blade this can be carried by the remaining blades of an impeller and returned safely to the landing station,
**characterized in that**,
in the event of a fault on a blade, remaining further blade(s) carry the defective blade and return it safely to the landing station, wherein all connecting ropes that are no longer required and may interfere can be detached, wherein a blade in hovering flight can be grasped by means of vacuum suction lifters (23) and held by the blade-holding robot (2).

## Revendications

1. Turbine pour la production d'électricité à l'aide de l'énergie éolienne, constituée de plusieurs pales (1a, 1b, 1c) individuelles, chacune desdites pales possède une ou plusieurs hélices (8) qui permettent un décollage et un atterrissage verticaux autonomes de la pale respective, dans laquelle toutes les pales d'une turbine sont reliées entre elles à l'aide de câbles de liaison (9, 10, 11, 13), dans laquelle toutes les pales d'une turbine décollent et atterrissent ensemble, dans laquelle, dans le cas d'une pale défectueuse, ladite pale peut être supportée par les pales restantes d'une turbine et ramenée en toute sécurité à la station d'atterrissage,
**caractérisée en ce que**
en cas de défaillance d'une pale, la ou les autres pales restantes supportent la pale défectueuse et la ramènent en toute sécurité à la station d'atterrissage, dans laquelle tous les câbles de liaison n'étant plus nécessaires et étant éventuellement défaillants peuvent être détachés, dans laquelle, au moyen de ventouses à vide (23), une pale se trouvant en vol stationnaire peut être saisie et maintenue par le robot de maintien de pale (2).
